# EUROPEAN PATENT APPLICATION

(11) **EP 4 764 461 A1**
(43) Date of publication of application: **24.06.2026**
(21) Application number: 24221592.9
(22) Date of filing: 19.12.2024
(51) Int. Cl.: G01N 21/84, G01N 21/88, G01N 21/47

(54) **SYSTEM AND METHOD FOR SURFACE INSPECTION OF A COMPOSITE PART OF AN AIRCRAFT**

(71) Applicant: Airbus S.A.S., 31700 Blagnac (FR)
(72) Inventor: Meng, Liu, 82024 Taufkirchen (DE); Sayeh, Mohamed, 82024 Taufkirchen (DE)
(74) Representative: KASTEL Patentanwälte PartG mbB

(57) **Abstract**

A system and a method for surface inspection of a composite part of an aircraft comprise a first illumination unit (12) to be positioned in front of a surface (14) of a composite part (16) to be inspected and to illuminates that surface (14) with evenly distributed light (18), and a second illumination unit (22) to illuminate the surface (14) with light (24) hitting the surface (14) at an angle from different sides. Both illumination units (12, 22) are configured to alternately illuminate the surface (14). A polarization camera unit (26) generates image data of the surface (14) while the surface (14) is alternately illuminated by the first and second illumination unit (12, 22). A processor unit (28) processes the image data, detects defects on the surface (14) of the composite part (16), and determines the directions of fibers within the composite part (16) from the image data. It classifies the defects including fiber related defects according to their criticality.

## Description

The invention relates to a system for surface inspection of a composite part of an aircraft. Further, the invention relates to a method for surface inspection of a composite part of an aircraft. In particular, the composite part to be inspected comprises or is made of a fiber reinforced material, in particular CFRP (Carbon Fiber Reinforced Polymers).

The invention is in particular applicable to the inspection of CRFP parts of an aircraft, and comprises e.g. cured surface inspection, cured flap panel surface inspection, cured CFRP stiffeners surface inspection, and primer-painted CFRP parts surface inspection.

Inspecting the surface of fiber reinforced composite parts like CFRP parts is necessary in order to detect defects on the surface and to eliminate them. The CFRP parts are typically very shiny and specular reflective. The defects are quite often very small so that they can hardly be seen with the naked eye. Or they are half hidden under reflective surfaces that require special angles to see clearly the structure. Sometimes, changing viewing angles on a part with complex geometry and surface texture is not ergonomic for human operators.

Defects may also occur within the composite part. For example, areas of the composite part in which the reinforcing fibers have an orientation which deviates from the desired orientation according to the specification need to be detected. Such defects would lead to a reduced strength of the composite part. Typically, these kinds of deviations can impact the part from the interior towards surface. Namely, fiber undulation on top of the surface is a strong indicator of interior undulation. Meanwhile, there is no effective automation method explicitly for interior undulation. Therefore, checking the part from outside is desired and optimal.

The inspection of composite parts must be performed on both middle and very large scale. For example, surfaces from 2 m² to 20 m² and even more than 800 m² in case of larger aircrafts need to be inspected. The time needed for inspecting the parts is an important cost factor. However, the surface inspection needs to be performed with a very high accuracy, typically in the range between 0.05 mm and 5 mm, in order to detect the defects for being able to eliminate them.

It is the object of the invention to provide a system and a method for inspecting surfaces of composite parts of an aircraft with high accuracy while reducing the time needed for aircraft surface inspection and the related costs.

The object is solved by a system for surface inspection of a composite part of an aircraft, comprising: a first illumination unit configured to be positioned in front of a surface of a composite part to be inspected and to illuminate that surface with evenly distributed light, a second illumination unit configured to illuminate the surface with light hitting the surface at an angle from different sides, wherein both illumination units are configured to alternately illuminate the surface; a polarization camera unit configured to generate image data of the surface while the surface is alternately illuminated by the first and second illumination unit; and a processor unit configured to process the image data and to detect defects on the surface of the composite part, and to determine the directions of fibers within the composite part from the image data.

Preferably, the first illumination unit comprises a base area light source and a top area light source, wherein the base area light source comprises a viewing window and the top area light source is arranged behind that viewing window, and wherein a beam splitter unit is arranged between the viewing window and the top area light source, to direct the light reflected from the surface to be inspected to the polarization camera unit.

The view hole is e.g. formed by a through hole within the base area light source.

Preferably, the base area light source and the top area light source form together a light emitting area which completely covers the surface to be inspected within the field of view of the polarization camera unit.

Preferably, the first illumination unit comprises a number of light sources, which eliminate the reflection of the system, especially of a through hole or viewing window, being captured in the image.

Preferably, the light emitting area extends in two parallel planes which are preferably arranged one above the other, each forming a flat light-emitting surface for illuminating the surface to be inspected.

Preferably, the second illumination unit comprises a number of light sources, which are elongated and/or formed as light-emitting bars.

Preferably, the second illumination unit comprises a number of light sources which are arranged at different sides or edges of the first illumination unit.

Preferably, the second illumination unit comprises a number of light sources which are arranged at four sides or edges of or circularly around the first illumination unit.

Preferably, the second illumination unit comprises a number of light sources which extend in a direction parallel to the surface of the composite part during its inspection.

Preferably, the polarization camera unit comprises a matrix polarization camera.

The polarization camera unit is preferably configured to capture images with a minimum of 4 directions of linear polarizations.

Preferably, the beam splitter unit comprises or is configured as a non-polarizing, semi-transparent beam splitter.

In particular, the beam splitter unit allows the camera unit to be positioned on a side of the arrangement of illumination units. In this way, the system is even more compact.

Preferably, the first illumination unit and/or the second illumination unit are configured to generate amber light.

Preferably, the processor unit is configured to classify the defects according to their criticality and/or to generate a link from the image of the defects to their physical location.

According to another aspect of the invention, the invention provides a method for surface inspection of a composite part of an aircraft, comprising the steps: Alternately illuminating a surface of a composite part to be inspected with evenly distributed light generated by a first illumination unit and with light hitting the surface at an angle from different sides generated by a second illumination unit; Generating image data of the surface with a polarization camera unit while the surface is alternately illuminated by the first illumination unit only and by the second illumination unit only; and processing the image data by a processor unit which detects defects on the surface of the composite part and determines the directions of fibers within the composite part from the image data.

Preferably, the polarization camera unit captures images of the surface of the composite part through a viewing window provided in a base area light source of the first illumination unit and via a beam splitter unit arranged between the viewing window and a top area light source of the first illumination unit.

Preferably, the surface to be inspected within the field of view of the polarization camera unit is completely covered by a light emitting area which is formed by the first illumination unit and frontally illuminating the surface.

Preferably, the top area light source is arranged behind the viewing window as seen from the surface to be inspected so that the base area light source and the top area light source together completely cover the surface to be inspected with the evenly distributed light.

Preferably, the processor unit classifies the defects on the surface of the composite part according to their criticality and generates links from the image data of the defects to their physical locations.

Preferably, the processor unit determines the directions of the fibers within the composite part by analyzing the polarization directions of the light hitting the surface at an angle from different sides and reflected to the polarization camera unit.

Preferably, the system according to the invention is used in the method.

With the system and the method according to the invention, in particular defects on the surface of CFRP parts can be detected. The parts are typically very shiny and specular reflective, but also dark. The system can detect e.g. scratches, excess resin, foreign objects, dents, imprints, flaking areas, wrinkles, gaps, discoloration, contamination, protruding fibers, ground/penetrated layers, porosity, lack of resin, and undulations. In addition, the angle of surface carbon fibers can be measured.

The system comprises e.g. two major parts: a polarization camera and a light system. The light system comprises e.g. three components: a base area light source formed by the first illumination unit, a top area light source formed by the second illumination unit, and a non-polarizing semi-transparent beam-splitter.

The invention overcomes in particular the difficulty to detect defects on the very shiny, highly reflective but often very dark surface of composite parts, which makes it very difficult to acquire image data of the surface. The system and method lights-up the surface, while blind spot reflections from the surface are not captured and thus they do not disturb the image of the surface. Thus, a very clear crisp image is generated without disturbing reflections.

The polarization camera detects in particular the carbon fibers and their orientation due to the polarization of the light when it is reflected by the carbon fibers. The carbon fibers polarize the light in a direction according to their orientation. This is used to determine where the fibers are aligned and in which direction. The system and method according to the invention detects e.g. areas where the fibers are not in the direction as designed or required.

The polarization angle is measured or detected by the polarization camera and calculated by a software module from the image data generated by the polarization camera. Preferably, the polarization camera captures four directions of polarization angles.

Preferably, the surface is illuminated with amber light, i.e. preferably in a range of about 590 nm. This provides the best quality. However, other wavelengths can be used as well and may be advantageous depending on the purpose, like e.g. blue or green light. Generally, wavelengths between 830 nm and about 1000 nm are preferred as well.

The system according to the invention provides a clean illumination in the whole field of view of the polarization camera.

Many different types of defects can be detected by the system and the method. For example, 16 types of defects including fiber defects have been identified. The number of types may vary depending on the specific inspection purposes. The processing unit is configured to determine the defects and to classify the defects. For example, the geometry of each defect is calculated and the type of each defect is determined from the image data. Preferably, each defect is classified according to its criticality, e.g. with the help of a comparison database. Preferably, this is done by a computer program.

A large variety of different types of defects including fiber related defects can be detected by the system in only one measurement run. It is not necessary to change the system in order to detect the defects.

Embodiments of the invention are described in more detail with reference to the accompanying drawings, in which
- **Fig.** 1: depicts a schematic 3D view of a system for surface inspection of a composite part according to a preferred embodiment of the invention;
- **Fig.** 2: depicts a schematic side view of the system shown in Fig. 1 during a first illumination mode;
- **Fig.** 3: depicts a schematic side view of the system shown in Fig. 1 during a second illumination mode;
- **Fig.** 4: depicts a flow chart of a method for surface inspection method according to a preferred example of the invention; and
- Fig. 5: depicts a cross-sectional view of an example of a composite part inspected using the system and method according to the invention

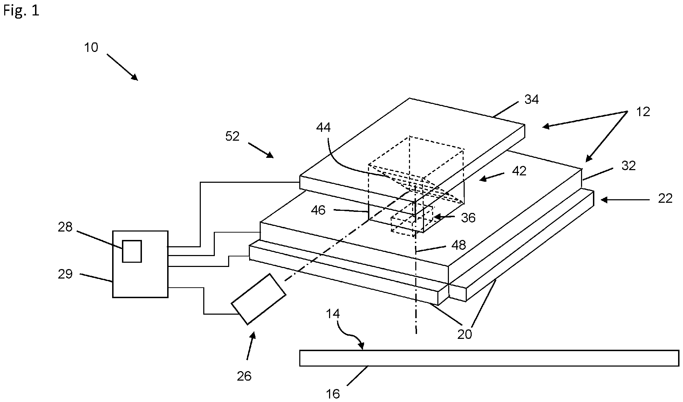

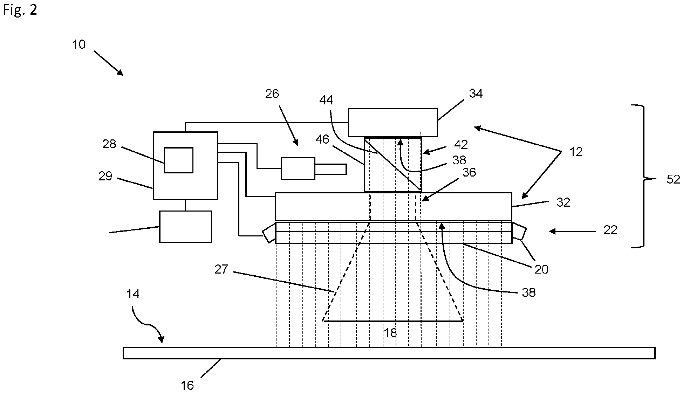

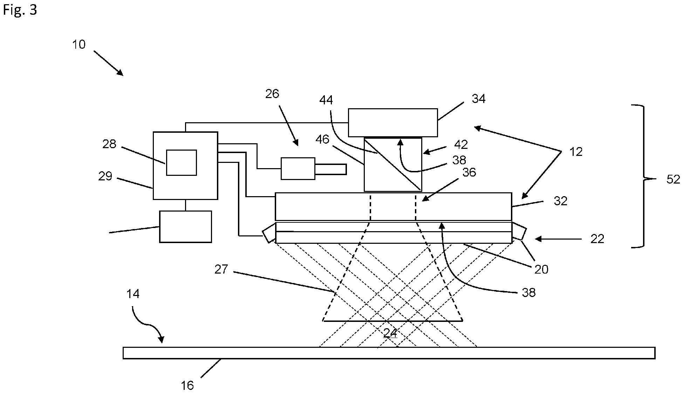

As depicted in **Figs.** 1, 2 **and** 3, a surface inspection system 10 according to a preferred embodiment of the invention comprises a first illumination unit 12, which is configured to be positioned in front of a surface 14 of a composite part 16 to be inspected and to illuminate the surface 14 with evenly distributed light 18 in a first illumination mode (see **Fig.** 2). A second illumination unit 22 is configured to illuminate the surface 14 with oblique incident light 24 hitting the surface 14 at an angle from different sides in a second illumination mode (see **Fig.** 3). Both illumination units are configured to alternately illuminate the surface 14.

A polarization camera unit 26 is configured capture images of the surface14 and to generate image data while the surface 14 is alternately illuminated by first illumination unit 12 and by second illumination unit 22.

A processor unit 28 is configured to process the image data and to detect defects on the surface 14 of composite part 16. It determines the directions of fibers within the composite part 16 from the image data with a computer program.

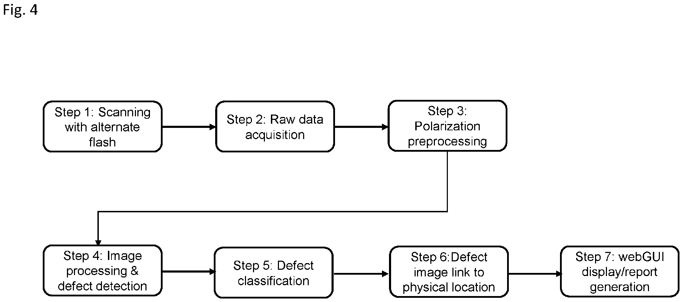

The first illumination unit 12 comprises a base area light source 32, and a top area light source 34. The base area light source 32 comprises a viewing window 36 formed as a through hole. The top area light source 34 is arranged behind that viewing window 36 as seen from surface 14 to be inspected. In this way, first base area light source 32 and the top area light source 34 form together a light emitting area 38 which completely covers the surface 14 within in the field of view 27 of polarization camera unit 26 (see Figs. 3 and 4).

The light emitting area 38 formed by base area light source 32 and top area light source 34 extends in 2 levels, which are aligned parallel to each other, each forming a flat or 2-dimensional surface for illuminating the surface 14 to be inspected.

The second illumination 22 unit comprises a number of elongated light sources 20, which are formed as light-emitting bars. They are arranged at the different sides or edges of the base area light source 32, i.e. they are arranged at four sides or edges of the first illumination unit 22 and preferably extend in a direction parallel to the surface 14 of the composite part 16 when it is inspected.

During operation, the first illumination unit 12 and/or the second illumination unit 22 generate amber light in the embodiment shown here.

A beam splitter unit 42 is arranged between viewing window 36 and top area light source 34, to direct the light 18, 24 generated by illumination units 12, 22 and reflected from the surface 14 to the polarization camera unit 26. The beam splitter unit 42 comprises a non-polarizing, semi-transparent beam splitter 44 which is preferably arranged in a chamber 46 made of a non-transparent material, preferably of black color In this way, double reflections of system interior being captured by the camera are prevented.

First illumination unit 12, second illumination unit 22 and beam splitter unit 42 form a light system 52 which is formed as one entity. It is configured to be moved together with polarization camera unit 26 for scanning the surface 14 of the composite part 16.

The beam splitter unit 42 redirects a part of the light path 48 to the polarization camera unit 26 arranged at one side of the light system 52.

The polarization camera unit 26 comprises a polarization camera and e.g. a lens. It is designed as a matrix polarization camera configured to capture images in four directions of polarization.

The light system 52 and the polarization camera unit 26 form an end effector which is configured to be mounted on a robot arm which is not shown in the figures, in order to be moved relative to the surface 14 for scanning it.

The processor unit 28 is configured to classify the defects according to their criticality and to generate a link from the image of the defects to their physical locations. It is part of a control and evaluation unit 29 to which the illumination units 12, 24 and the camera unit 26 are connected in order to be controlled.

With reference to **Fig. 4****,** a preferred example of a method for surface inspection is described now. In this example, the inspection system 10 described above is used.

The surface 14 of a composite part 16 is scanned with polarization camera unit 26 and with first and second illumination units 12, 22.

During the scan, first and second illumination units 12, 22 generate alternating flashes illuminating surface 14. Thus, the surface 14 is alternately illuminated with evenly distributed light 18 only, which is generated by first illumination unit 12, and with light 24 hitting the surface at an angle from different sides only, which is generated by a second illumination unit 22.

While the surface 14 is alternately illuminated by the first illumination unit 12 and by the second illumination unit 22, polarization camera unit 26 captures images of the surface 14 and generates image data of the surface 14. The image data is acquired as raw data and preprocessed, wherein the polarization directions of the light reflected from surface 14 is determined. To determine the polarization directions, the image data representing surface 14 when illuminated with the oblique incident light 24 emitted from second illumination unit 22 and forming a dark field illumination is used.

For generating the image data, polarization camera unit 26 captures images of the surface 14 the composite part 16 through viewing window 36 provided in base area light source 32 of the first illumination unit 12 and via beam splitter unit 46 arranged between the viewing window 36 and top area light source 34 of the first illumination unit 12.

When the image data is generated, the surface 14 to be inspected which is within the field of view 27 of camera unit 26 is completely covered by light emitting area 38 formed by the first illumination unit 12 and frontally illuminating the surface 14 as a bright field illumination.

The image data is processed by processor unit 28 which detects defects on the surface 14 of composite part 16 including defects relating to the fibers of the composite part 16. In this step, the directions of fibers within the composite part 16 are and the angles of their directions or orientations are determined and calculated from the image data, i.e. they are measured.

Further, the defects are classified according to their criticality, and links from the image data of the defects to their physical locations are generated by processor unit 28.

A report of the results of the surface inspection is generated, which is presented on a display or in written form. It comprises the details of the defects, their physical locations, and their classification including their individual criticality.

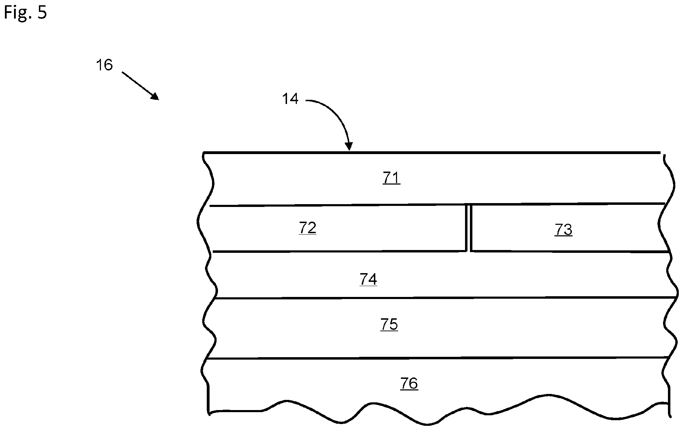

As shown in Fig. 5, the system and method described above can in particular measure the orientation of fibers within carbon fiber layer 73 and partially the orientation of fibers within carbon fiber layer 74. In case that carbon fiber layers are occluded by upper non-transparent or non-translucent layers, like carbon fiber layers 75, 76 which may be occluded by carbon fiber layers 73, 74 in this example, the orientation of carbon fibers in the occluded layers 75, 76 cannot be measured. In general, the orientation of carbon fibers can be measured if they are not occluded by upper layers, i.e. layers which are closer to the inspected surface 14.

### List of reference signs:

- 10: surface inspection system
- 12: a first illumination unit
- 14: surface to be inspected
- 16: composite part
- 18: evenly distributed light
- 20: elongated light sources / light-emitting bars
- 22: second illumination unit
- 24: oblique incident light
- 26: polarization camera unit
- 27: field of view
- 28: processor unit
- 29: control and evaluation unit
- 32: base area light source
- 34: top area light source
- 36: viewing window
- 38: light emitting area
- 42: beam splitter unit
- 44: non-polarizing, semi-transparent beam splitter
- 46: chamber
- 48: light path
- 52: light system
- 71: resin film
- 72: glass layer
- 73: carbon layer 1
- 74: carbon layer 2
- 75: carbon layer 3

## Claims

1. System for surface inspection of a composite part of an aircraft, comprising:
- a first illumination unit (12) configured to be positioned in front of a surface (14) of a composite part (16) to be inspected and to illuminate that surface (14) with evenly distributed light (18),
- a second illumination unit (22) configured to illuminate the surface (14) with light (24) hitting the surface (14) at an angle from different sides, wherein both illumination units (12, 22) are configured to alternately illuminate the surface (14);
- a polarization camera unit (26) configured to generate image data of the surface (14) while the surface (14) is alternately illuminated by the first and second illumination unit (12, 22);
- and a processor unit (28) configured to process the image data and to detect defects on the surface (14) of the composite part (16), and to determine the directions of fibers provided within the composite part (16) from the image data.

2. System according to claim 1, **characterized in that** the first illumination unit (12) comprises a base area light source (32) and a top area light source (34), wherein the base area light source (32) comprises a viewing window (36) and the top area light source (34) is arranged behind that viewing window (36), and wherein a beam splitter unit (42) is arranged between the viewing window (36) and the top area light source (34), to direct the light reflected from the surface (14) to be inspected to the polarization camera unit (26).

3. System according to claim 2, **characterized in that** the first illumination unit (12) and the viewing window (36) are configured to minimize a reflection of the viewing window (36) from the illuminated surface (14) being captured by the polarization camera unit (26);

4. System according to claim 2 or 3, **characterized in that** the base area light source (32) and the top area light source (34) form together a light emitting area (38) which completely covers the surface (14) to be inspected within the field of view (27) of the polarization camera unit (26).

5. System according to claim 4, **characterized in that** the light emitting area (38) extends in two parallel planes arranged one above the other, each forming a flat light-emitting surface for illuminating the surface 14 to be inspected.

6. System according to one of the preceding claims, **characterized in that** the second illumination unit (22) comprises a number of light sources (20), which
a) are elongated and/or formed as light-emitting bars; and/or
b) are arranged at different sides or edges of the first illumination unit (12); and/or
c) are arranged at four sides or edges of the first illumination unit (12) or circularly around the first illumination unit (12); and/or
d) extend in a direction parallel to the surface (14) of the composite part (16) during its inspection.

7. System according to one of the preceding claims, **characterized in that**
- the polarization camera unit (26) comprises a matrix polarization camera; and
- the beam splitter unit (42) comprises or is configured as a non-polarizing, semi-transparent beam splitter (44).

8. System according to one of the preceding claims, **characterized in that** the first illumination unit (12) and/or the second illumination unit (22) are configured to generate amber light.

9. System according to one of the preceding claims, **characterized in that** the processor unit (28) is configured to classify the defects according to their criticality and/or to generate a link from the image of the defects to their physical location.

10. Method for surface inspection of a composite part of an aircraft, comprising:
a) Alternately illuminating a surface (14) of a composite part (16) to be inspected with evenly distributed light (18) generated by a first illumination unit (12) and with light (24) hitting the surface (14) at an angle from different sides generated by a second illumination unit (22);
b) Generating image data of the surface (14) with a polarization camera unit (26) while the surface (14) is alternately illuminated by the first illumination unit (12) and by the second illumination unit (22); and
c) Processing the image data by a processor unit (28) which detects defects on the surface (14) of the composite part (16) and determines the directions of fibers within the composite part (16) from the image data.

11. Method according to claim 10, **characterized in that** the polarization camera unit (26) captures images of the surface (14) of the composite part (16) through a viewing window (36) provided in the second illumination unit (22) and via a beam splitter unit (42) arranged between the viewing window (36) and a top area light source (34) of the first illumination unit (12).

12. Method according to claim 11, **characterized in that** the viewing window (36) is provided in a base area light source (32) of the first illumination unit (12).

13. Method according to one of claims 10 to 12, **characterized in that** the surface (14) to be inspected within the field of view (27) of the polarization camera unit (26) is completely covered by a light emitting area (38) which is formed by the first illumination unit (12) and frontally illuminating the surface (14).

14. Method according to one of claims 11 to 13, **characterized in that** the top area light source (34) is arranged behind the viewing window (36) so that the base area light source (32) and the top area light source (34) together completely cover the surface (14) to be inspected with the evenly distributed light (18).

15. Method according to one of claims 10 to 14, **characterized in that** the processor unit (28) classifies the defects on the surface (14) of the composite part (16) according to their criticality and generates links from the image data of the defects to their physical locations.

16. Method according to one of claims 10 to 15, **characterized in that** the processor unit (28) determines the directions of the fibers within the composite part (16) by analyzing the polarization directions of the light hitting the surface (14) at an angle from different sides and reflected to the polarization camera unit (26).
